# FASCICULE DE BREVET EUROPEEN

(11) **EP 0 540 393 B1**
(45) Date de publication et mention de la délivrance du brevet: **20.08.1997**
(21) Numéro de dépôt: 92402832.7
(22) Date de dépôt: 16.10.1992
(51) Int. Cl.: G02B 27/00, G02B 23/10, G02B 23/12

(54) **Jumelle informatique**
Fernglas mit Rechnersystem
Binoculars with computer system

(30) Priorité: 31.10.1991 FR 9113490
(43) Date de publication de la demande: 05.05.1993
(73) Titulaire: THOMSON-CSF, 75008 Paris (FR)
(72) Inventeur: Michel, Claude, Thomson-CSF, F-92045 Paris la Défense (FR); Giry, Philippe, Thomson-CSF, F-92045 Paris la Défense (FR)
(74) Mandataire: Benoit, Monique

(56) Documents cités:
- EP-A- 0 315 742
- GB-A- 1 403 575
- GB-A- 2 143 948
- US-A- 4 012 123
- US-A- 4 915 487
- Week 8622, Derwent Publications Ltd., London, GB; AN 86-139060 & EP-A-0 182 698 (SINTRA & THOMSON-CSF)
- Week 8738, Derwent Publications Ltd., London, GB; AN 87-265955 & FR-A-2 593 932 (THOMSON-CSF)

## Description

L'invention se situe dans le domaine des dispositifs de visualisation et en particulier dans le domaine des dispositifs qui permettent de superposer à une première image constituée par exemple par l'image d'un paysage naturel, une seconde image constituée par exemple d'éléments symboliques tels que des symboles géographiques ou d'autres symboles.

Dans l'état actuel de la technique l'observation d'un paysage se fait avec une longue-vue (marine) ou plus communément avec des jumelles qui sont appréciées pour leur qualité de luminosité. L'observateur note ce qu'il observe soit manuellement sur une carte graphique ou par l'intermédiaire d'un clavier sur une carte géographique informatisée.

Un brevet US 4,012,123 divulgue un dispositif binoculaire affichant des données numérisées superposées à un champ de vision et un brevet GB-A-2 143 948 divulgue un dispositif optique déterminant la direction de l'axe de visée. Des dispositifs analogues sont également connus de US-A-4 915 487 et EP-A-315 742.

Le but de la présente invention est principalement de changer ce mode d'interface en permettant l'enregistrement direct sur une carte géographique informatisée de données relatives au paysage observé. Il vise aussi à faciliter la perception de ces données en faisant apparaître à l'observateur en superposition à l'image observée une seconde image. Cette seconde image peut être une image symbolique tirée de la carte géographique du lieu observé et faisant apparaître par exemple, les cours d'eau, les chemins, les ponts, des lignes de niveaux et d'autres éléments remarquables du paysage. En plus des symboles géographiques il est possible également selon l'invention de faire apparaître d'autres symboles représentant par exemple des positions amies ou ennemies avec une symbologie permettant d'identifier la nature de ces positions (char, nid de mitrailleuse...).

Cette seconde image peut également être une image de synthèse traitée pour apparaître en complément à ce qui est observé, ainsi on pourra sur un paysage dans lequel figure un site archéologique faire apparaître une représentation de l'état du site tel qu'on a pu le reconstituer. De même à un bâtiment en construction on pourra superposer l'image du bâtiment fini.

Enfin, à des fins par exemple militaires, le dispositif selon l'invention pourra permettre à des individus équipés du dispositif de communiquer entre eux et d'inscrire directement sur des cartes informatisées détenues par chacun d'eux les informations visualisées par les autres membres de l'équipe.

Les buts qui viennent d'être cités pour le dispositif selon l'invention sont les buts poursuivis lorsque l'invention est utilisée en dispositif de visualisation que l'on appellera par analogie avec ce qui se fait en aéronautique "dispositif de visualisation tête haute" c'est-à-dire un dispositif de visualisation dans lequel on superpose à l'image d'une zone géographique une autre image destinée à matérialiser des points des lignes ou des surfaces.

L'invention vise également à permettre l'utilisation du dispositif de visualisation selon l'invention en tête basse. Dans cette utilisation le paysage extérieur n'est plus nécessaire et le dispositif ne sert à visualiser qu'une image générée par un calculateur et sa mémoire associée. L'image pourra être l'image de la carte géographique du lieu où se trouve l'observateur, ou de zones proches à différentes échelles. Elle vise aussi à permettre le déroulement de la carte dans différentes directions choisies par l'utilisateur ceci avec facilité et par l'utilisation de mouvements naturels.

Enfin l'invention vise à satisfaire tous ces buts sous une forme légère et bon marché.

La présente invention a pour objet un dispositif tel que décrit par la revendication 1.

L'invention est donc une lunette d'approche du type longue-vue ou jumelle comprenant dans le boîtier où sont logés l'objectif et l'oculaire et de préférence entre les deux un moyen générateur d'image et un moyen de renvoi du type lame semi-transparente permettant de superposer à l'image vue par l'objectif et au même endroit une autre image, celle d'un écran. L'image générée par l'écran pourra être lumineuse par elle-même par exemple si l'écran est un écran électroluminescent formé à partir d'une poudre électroluminescente connue dans l'art, la poudre étant disposée entre deux lames de verre sur lesquelles court un réseau d'électrodes. La disposition des électrodes détermine les pixels de l'image qui peut être formée. L'intensité lumineuse de chaque pixel est une fonction du champ créé entre les électrodes qui commandent le pixel. Selon la configuration de l'écran, l'image peut être monochrome ou polychrome.

La constitution et la commande de tels écrans est connue par elle-même et ne sera pas décrite plus avant.

L'image générée par l'écran peut ne pas être lumineuse par elle-même et dans ce cas il faudra lui adjoindre un dispositif d'éclairage. Ce dispositif peut être tout dispositif connu dans l'art et notamment une plaque électroluminescente, une diode, un tube fluorescent...

Le dispositif de renvoi permet de renvoyer l'image de l'écran sur le trajet optique de la jumelle. Il est composé d'une lame semi-transparente de préférence escamotable par rotation de façon à permettre de visionner au choix l'image de l'extérieur et l'image de l'écran en superposition l'une à l'autre ou l'image de l'extérieur seule.

Le dispositif de renvoi pourra comporter en outre entre l'écran et la lame semi-transparente d'autres dispositifs optiques tels que des lentilles ou des miroirs destinés à ajuster la taille de l'image de l'écran et le chemin optique de l'image de l'écran. L'ensemble de ces dispositifs pourra également être remplacé par un hologramme faisant fonction de miroir et de lentille.

Le dispositif selon l'invention pourra comprendre outre l'écran et le dispositif de renvoi des moyens supplémentaires d'obturation de l'objectif.

Il est dit supplémentaire car les lunettes d'approche comportent en général de façon connue des opercules de protection de l'objectif, couvercle pivotant ou coulissant, qui peuvent être employées comme obturateur.

Avec un obturateur le dispositif selon l'invention est utilisable en tête basse pour visualiser l'image de l'écran seul.

Dans cette configuration le dispositif optique se réduit à une sorte de microscope permettant de visualiser avec une taille raisonnable l'image de l'écran. Ce genre d'obturateur commode pour travailler essentiellement en tête basse peut s'avérer trop rustique pour travailler en tête haute.

Dans ce mode de travail on peut avoir besoin de visualiser en alternance l'image de l'extérieur et l'image de l'écran. Dans ce cas, l'obturateur peut être une lame à cristaux liquides ayant deux faces, chacune des faces comportant une électrode transparente.

Selon la tension appliquée les cristaux absorbent plus ou moins la lumière de l'extérieur. Un tel obturateur a un double intérêt, d'une part il permet de travailler en tête basse comme indiqué plus haut mais il permet de plus d'ajuster le niveau de luminosité de l'image extérieure de telle sorte que l'image intérieure, celle de l'écran, et l'image extérieure du paysage n'aient pas des écarts de luminosité trop importants de façon à ce que les deux images soient bien visibles ensemble.

Un élément important de l'invention et qui facilite grandement son utilisation est constitué par le fait que le dispositif optique est muni de capteurs permettant de connaître la direction de son axe de visée, cette direction étant définie par son site et son azimut.

Les capteurs peuvent être tout dispositif permettant de mesurer un angle par rapport à une référence connue. On citera à titre d'exemple non limitatif :
- un compas et un inclinomètre permettant d'obtenir l'azimut et le site. Les inclinomètres sont connus dans l'art, ils sont constitués par une capacité déformable prenant au repos des valeurs différentes en fonction de son inclinaison par rapport à la verticale.

Les capteurs peuvent aussi être constitués par trois gyromètres à fibre optique. L'un des gyromètres pourra comporter un enroulement de fibre autour du boîtier du dispositif optique, l'enroulement ayant pour axe un axe parallèle à l'axe de visée, et deux enroulements autour d'axes perpendiculaires à l'axe de visée et perpendiculaires entre eux. Lorsque la lunette est au repos, le seul mouvement de rotation qu'elle subit est le mouvement de rotation de la terre soit 15°/heure. Les vitesses de rotation mesurées sur les différents axes permettent alors de connaître la position de la lunette par rapport à l'axe de rotation de la terre, et donc sa position en site et azimut si l'on connaît la latitude du lieu où l'on se trouve.

Le choix entre les différents capteurs sera un compromis entre l'encombrement, le poids, la précision de la mesure et le prix des capteurs.

Le dispositif optique selon l'invention peut également être muni d'un télémètre par exemple laser. Ce télémètre permet de connaître la distance d'un objet situé dans l'axe de visée de la lunette.

Il a été vu plus haut que la jumelle selon l'invention était équipée d'un écran dont l'état des différents pixels était une fonction de la tension appliquée aux bornes des électrodes commandant chaque pixel.

De préférence, cet état de tension des électrodes sera commandé par un calculateur. Les moyens de réaliser une telle commande à partir de jeux d'instructions, d'éléments d'informations stockés dans une mémoire et de moyens de lecture donnant accès à des dispositifs de stockage d'information tels que des dispositifs magnétiques ou des disques optiques, sont connus en eux-mêmes et ne seront pas décrits plus avant.

Dans l'utilisation particulière envisagée dans la présente application les données stockées seront essentiellement des cartes géographiques auxquelles il sera possible d'ajouter ou de retrancher des symboles représentant en temps réel des informations additionnelles sur des éléments se trouvant aux lieux géographiques représentés par les cartes. Les données stockées pourront comprendre également des silhouettes par exemple de chars amis ou ennemis ; dans ce cas il sera souhaitable de disposer de logiciels permettant d'en faire varier l'échelle et l'angle de présentation. Ces logiciels associés sont connus de l'homme de l'art notamment en conception assistée par ordinateur (CAO). Ces silhouettes et les logiciels seraient alors utilisés en configuration tête haute ou basse pour aider le porteur du dispositif à identifier des éléments se trouvant dans son champ d'observation.

La commande des logiciels du calculateur sera réalisée de préférence au moyen de touches disposées sur le boîtier du dispositif optique et par l'utilisation des mouvements de la lunette elle-même, captés par les capteurs directionnels. Les touches seront disposées de telle sorte qu'elles puissent être actionnées alors que le porteur tient la jumelle en position d'observation, même si le porteur est muni de gants.

Il a été vu plus haut également que la détermination de l'axe de visée de la lunette nécessite dans certains cas la connaissance d'au moins une donnée sur le lieu géographique où se trouve la lunette, latitude, valeur et direction du champ magnétique. La connaissance de ce lieu peut être obtenue par adjonction au dispositif de visualisation de moyens de localisation. Ces moyens pourront être des moyens autonomes tels que des récepteurs de balises au sol ou satellisés, par exemple les balises du "global positioning system" (G.P.S.) ou équivalents (GLONAS NAVSTAR LORAN C) (Appellations protégées). Ces moyens pourront aussi être des moyens autonomes de positionnement tels qu'un podomètre de localisation. Ce moyen est décrit dans la demande de brevet français n° 90.15160 déposée le 4 décembre 1990.

Il s'agit d'un dispositif de navigation pour piéton. Il est logé dans le talon de la chaussure du piéton. Il comporte des accéléromètres, un référentiel de direction et un calculateur. Ce dernier calcule par intégration à partir des indications des accéléromètres la nouvelle position géographique connaissant l'ancienne. Pour être petit et bon marché, les capteurs (accélération et direction) sont rustiques. L'invention consiste à utiliser les phases d'arrêt lu pied, détectées par des valeurs d'accélération et de vitesse inférieures à des seuils donnés, pour recaler les accéléromètres et les intégrateurs. Une fois recalées, les indications des accéléromètres sont utilisées pour retrouver la verticale et corriger le référentiel de direction. Enfin, on remarquera que le positionnement peut être obtenu à l'aide des moyens déjà décrits et d'un logiciel dédié, par triangulation. Il suffit pour cela de mettre successivement en coïncidence sur la carte d'une zone observée l'axe de visée de la lunette avec quelques points remarquables de la zone.

Enfin, le dispositif ayant aussi pour finalité d'être employé par chacun des membres d'une équipe de façon à réaliser un travail coopératif, il sera souhaitable que le calculateur du dispositif puisse actionner des moyens de transmission pour transmettre les informations additionnelles recueillies par chaque membre de l'équipe vers les autres membres de l'équipe ou vers une unité centrale de commandement et de moyens pour recevoir des informations en provenance de l'unité centrale ou des autres membres de l'équipe.

En résumé l'invention qui vient d'être décrite est relative à une jumelle dont le boîtier comporte un écran dont l'image peut apparaître seule ou en superposition à l'image du paysage extérieur. Cette jumelle comporte également des moyens permettant de connaître la direction de l'axe de visée. L'image de l'écran est commandée par un calculateur, l'interface avec l'utilisateur étant formé par des touches disposées sur la jumelle et par les mouvements de la jumelle.

Le calculateur peut être connecté à un poste émetteur-récepteur et à des moyens de positionnement. La forme physique selon laquelle sont connectés ces divers éléments peut être variable et dépendra essentiellement du poids et de l'encombrement des divers éléments.

Un exemple particulier de réalisation et ses variantes sera maintenant décrit en référence aux dessins annexés dans lesquels :
- la figure 1, représente une vue de dessus d'une coupe schématisée selon un plan horizontal médian d'un canon de jumelle selon l'invention ;
- la figure 2, représente une vue schématique de variantes de réalisation ;
- la figure 3, représente le canon de lunette de la figure 1;
- la figure 4, représente pour une variante une vue de côté de la partie de boîtier de la jumelle située du côté de l'objectif ;
- la figure 5, représente la jumelle équipée et un calculateur qui lui est connectable ;
- la figure 6, représente l'architecture informatique de la jumelle équipée selon l'invention ;
- la figure 7, représente un exemple de la façon d'utiliser les mouvements naturels de la jumelle pour changer la seconde image ;
- la figure 8, représente un combattant équipé du dispositif complet selon l'invention.

Le dispositif selon la réalisation particulière qui va être présentée est une jumelle binoculaire comportant de façon classique deux canons optiques contenant chacun un objectif et un oculaire. Dans la description qui va suivre on ne s'intéressera, en ce qui concerne la partie optique, qu'à l'un des canons, celui qui contient les dispositifs additionnels selon l'invention.

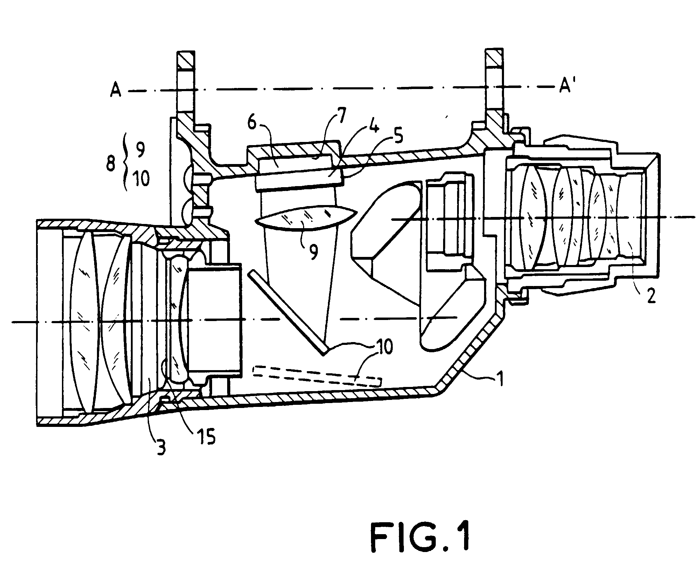

La figure 1 représente une vue de dessus d'une coupe schématisée selon un plan horizontal médian d'un canon de jumelle selon l'invention contenant le générateur de la seconde image.

Le canon de jumelle comporte de façon classique un boîtier 1, un oculaire 2 et un objectif 3, l'axe de visée de la jumelle est matérialisé par l'axe AA' qui représente l'axe de symétrie des deux canons de jumelle.

Dans le dispositif particulier représenté le canon comporte de plus, disposé latéralement entre l'oculaire et l'objectif, un dispositif de présentation d'image électronique constitué d'un écran 4 à cristaux liquides de petite taille. La surface totale de l'écran est 24x24 mm². Cette surface permet de disposer de 512x512 points images de chacun 30x30 µm². Les bords de l'écran ont une largeur de 3mm utilisée pour les prises de connexion d'un réseau d'électrodes. Ces connexions et une connexion d'éclairage sont reliées à un connecteur 5 permettant le raccordement à un calculateur extérieur éventuellement par l'intermédiaire d'une carte d'interface d'adaptation. L'alimentation électrique est de 3mA sous 5 volts. Le dispositif d'éclairage est constitué d'une plaque électroluminescente 6 de dimensions égales à celles de l'écran et dont l'avantage est la faible épaisseur, de l'ordre du mm, et une sélectivité spectrale adaptable à l'utilisation d'un miroir dichroïque de renvoi 7. La consommation électrique de l'ensemble de l'écran avec son éclairage dans les conditions particulières d'utilisation liées à l'invention et selon les conditions de contraste requises en fonction de la luminosité extérieure est de 0,01 à 2 watts.

Un dispositif optique 8 composé dans ce cas d'une lentille 9 et d'une lame 10 à faces parallèles semi-transparente disposée à 45° par rapport à l'axe optique de l'objectif, permet de superposer l'image de l'écran à l'image vue à travers l'objectif. Dans des variantes de réalisation, la disposition de l'écran et la composition des moyens de renvoi de l'image peuvent être différentes.

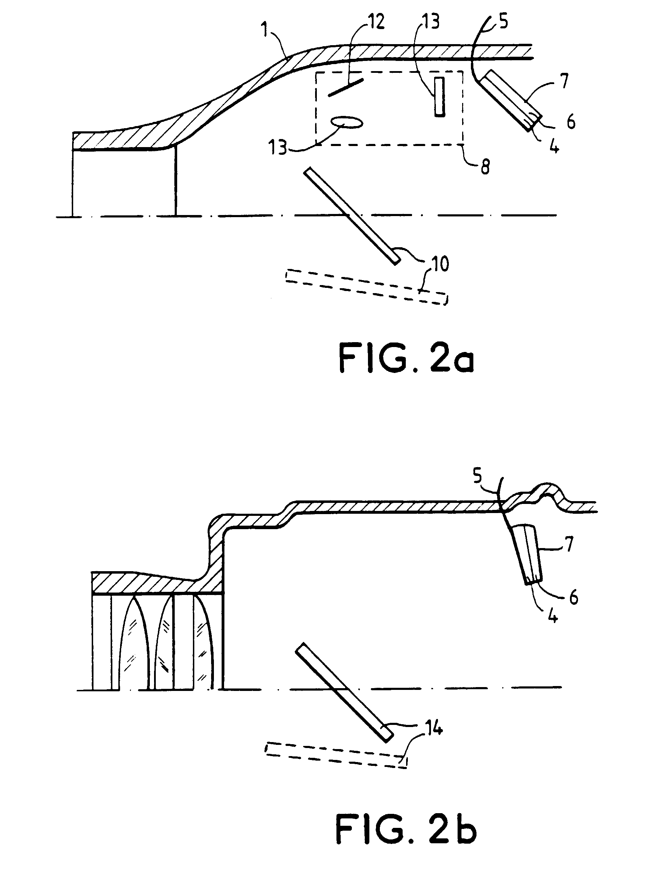

On a représenté figure 2 une vue schématique de variantes de réalisation, l'une (figure 2a) dans laquelle pour disposer d'un chemin optique plus long entre l'écran 4 et la lame de renvoi 10, l'écran 4 est disposé différemment.

Le dispositif optique 8 de renvoi comporte dans ce cas un miroir de renvoi 12 et une ou plusieurs lentilles 13.

Dans l'autre variante de réalisation (figure 2b) le dispositif de renvoi 8 et la lame semi-transparente 10 sont remplacés par un hologramme ayant des fonctions de focalisation et de miroir. Cet hologramme 14 est mis à la place de la lame 10.

Dans toutes les variantes de réalisation la lame 10 ou l'hologramme 14 peuvent être escamotables par exemple par rotation. La position escamotée est représentée en pointillés.

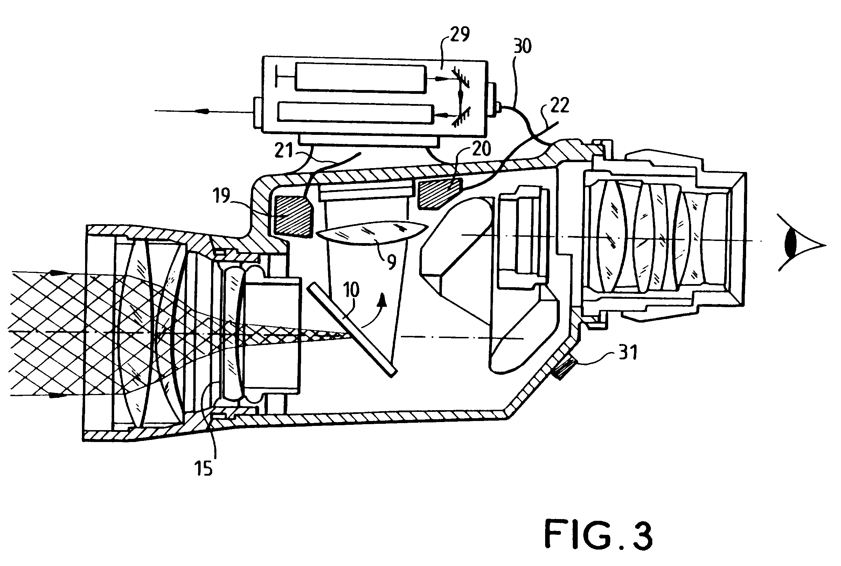

La figure 3 représente le canon de lunette de la figure 1 selon la même coupe mais l'on a représenté des éléments additionnels qui seront ci-après décrits.

Les éléments additionnels comportent un atténuateur de transmission optique variable 15. Cet atténuateur 15 connu par lui-même est un ensemble de deux lames transparentes entre lesquelles est inséré un cristal liquide à molécules dichroïques chirales. Selon l'orientation des molécules commandée par des électrodes transparentes disposées sur les lames, la lame laisse plus ou moins passer la lumière. La transmission peut varier de quasi totale à quasi nulle.

Le dispositif selon l'invention comporte également des moyens de mesure de la direction de l'axe de visée de la lunette ; ces moyens sont constitués par un magnétomètre 19 situé dans le boîtier 1 derrière l'objectif et latéralement par rapport à lui.

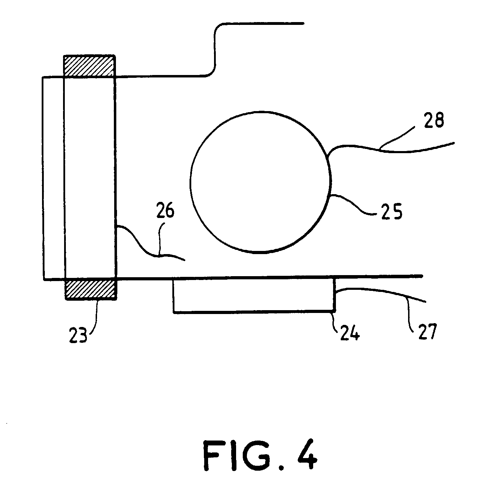

Le magnétomètre 19 donne l'indication d'azimut. Un inclinomètre 20 situé également dans le boîtier donne une indication de site. Les données de ces instruments sont transmissibles sous forme numérique vers un calculateur par des liaisons 21, 22. Il convient de noter que les moyens d'indication de position peuvent comporter des variantes, l'une d'elle à base de gyromètre à fibre optique est représentée figure 4. Cette figure 4 représente pour une variante une vue de côté de la partie de boîtier de la jumelle située du côté de l'objectif. Ce boîtier comporte, disposés extérieurement, trois enroulements de fibre optique 23, 24, 25 qui sont les capteurs des gyromètres. Les axes de ces enroulements sont respectivement l'axe optique de l'objectif et deux axes perpendiculaires à l'axe optique de l'objectif. Les données issues de ces gyromètres sont transmissibles sous forme numérique vers un calculateur par des liaisons 26, 27, 28.

Dans sa version la plus sophistiquée la jumelle selon l'invention comporte en outre un télémètre laser 29. Ce télémètre est monté entre les deux canons optiques de la jumelle de telle sorte que son axe de visée coïncide avec l'axe AA' de visée de la jumelle, les données du télémètre sont transmissibles vers un calculateur par une liaison 30.

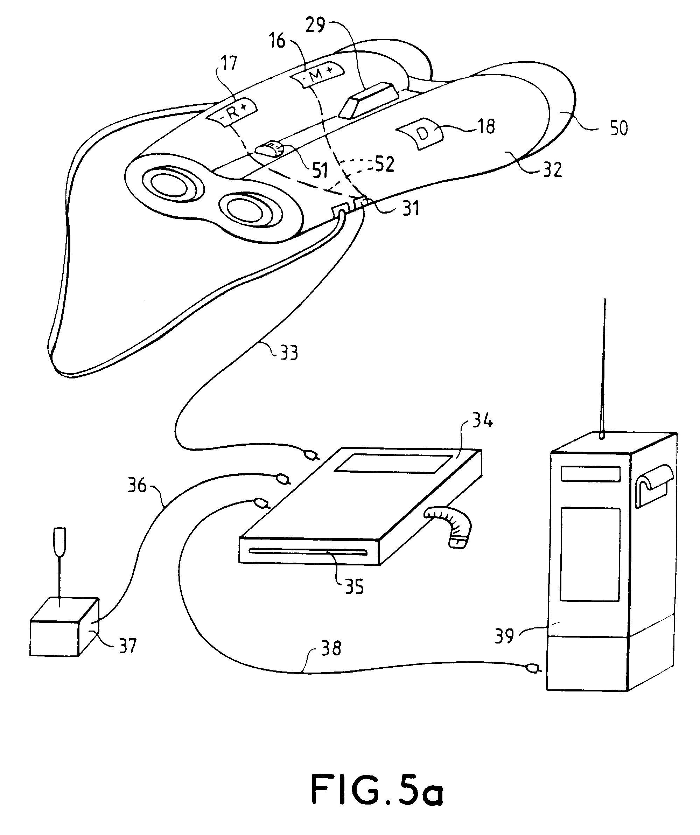

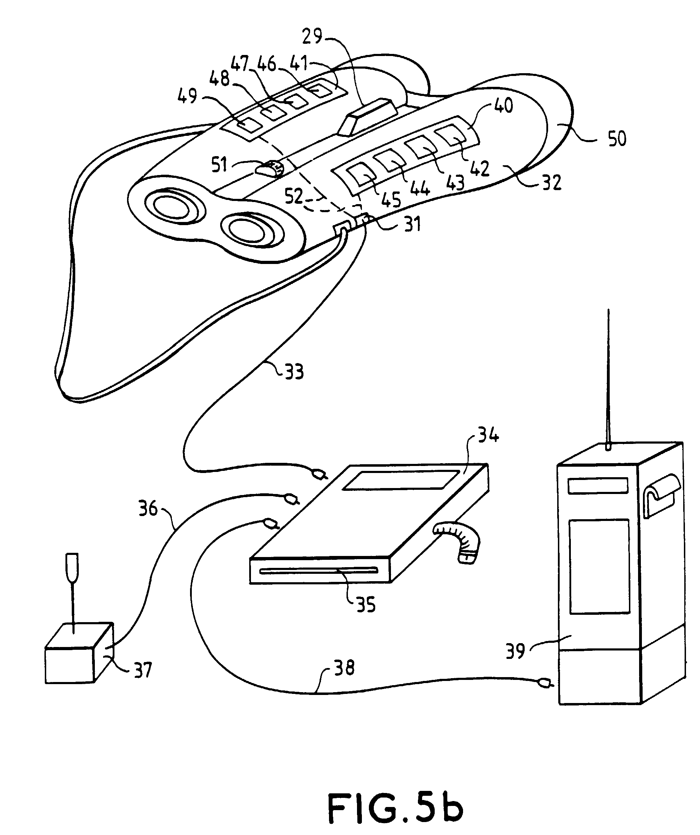

Dans une version moins sophistiquée la position du bouton de réglage de netteté 51 (figure 5) est captée (par tous moyens connus) et transmise vers le calculateur qui en tire alors une fourchette de positionnement.

L'ensemble des liaisons vers le calculateur qui, dans le cas de la réalisation, est à l'extérieur de la lunette, est relié au niveau de la jumelle sur une prise de connexion 31. Cette prise reçoit donc dans le cas le plus complet les liaisons 5, 18, 21, 22, 30 ou les liaisons en provenance d'autres capteurs de direction 26-28 et de connecteur 52 en provenance de blocs de touches 40, 41 qui seront décrits plus loin.

La figure 5 représente la jumelle équipée et un calculateur qui lui est connectable.

Cette figure comporte la jumelle équipée complète référencée 32 qui vient d'être décrite. Cette jumelle est branchée par l'intermédiaire de son boîtier de connexion 31 et d'une liaison 33 vers un calculateur 34.

Ce calculateur est équipé d'un lecteur de disque optique 35. Il est lui-même relié par une connexion 36 à un dispositif récepteur 37 de localisation et par une liaison 38 à un poste émetteur récepteur 39.

Dans le mode préféré de réalisation représenté figure 5 a, on a cherché à réduire le nombre de touches de telle sorte que l'on puisse mettre des touches assez grosses et assez éloignées les unes des autres pour que l'utilisateur puisse les actionner même s'il est muni de gants. Dans cette version, la commande du calculateur est assurée par les touches et par les mouvements imprimés à la jumelle par l'utilisateur.

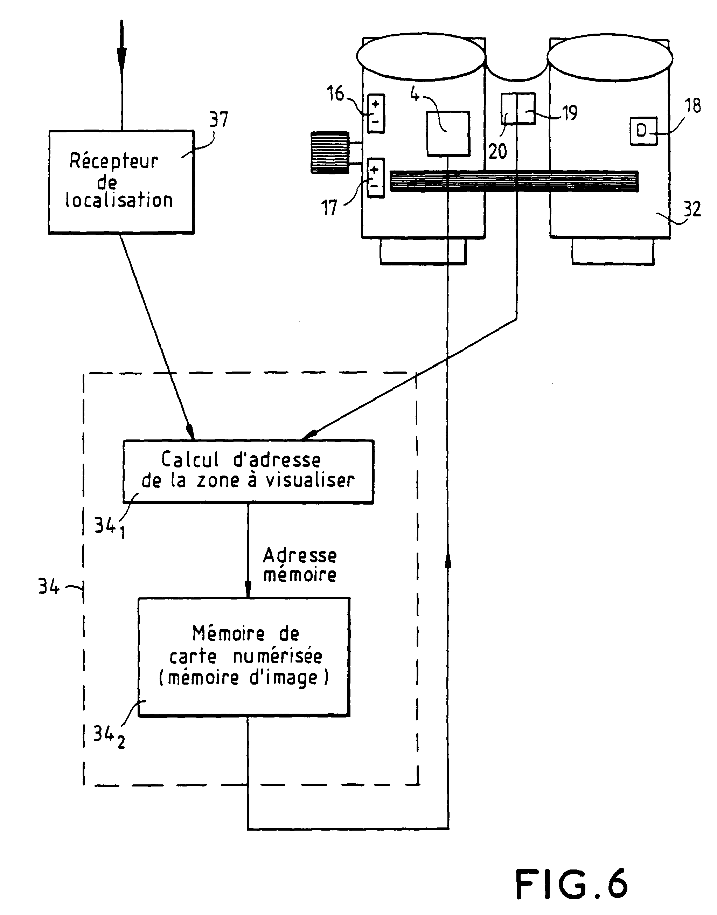

Sur la figure 5 ont été représentées, sur le canon gauche de la jumelle, deux touches 16, 17 dites M comme mode et R comme réglage. Sur le canon droit est placée une touche 18 dite D comme désignation. Ces touches et les mouvements de la jumelle sont utilisés pour introduire des données ou des commandes dans le calculateur 34. Les touches 16, 17 M et R sont des touches à trois positions +, - et neutre. Un "bip" sonore non représenté permet de façon connue de confirmer l'enfoncement de la touche. Les blocs de touches sont reliables à un calculateur par une liaison 52. Le fonctionnement est très dépendant des logiciels. Une description succincte d'un logiciel d'utilisation sera ci-après effectuée afin de préparer la description de la figure 6 qui représente l'architecture informatique du dispositif. La description du logiciel est dite succincte car elle est limitée à quelques aspects du logiciel qui permettent de faire comprendre l'introduction de données et/ou de commandes au moyen des touches 16, 17, 18 et des mouvements de la jumelle captés par les capteurs directionnels 19, 20.

Le logiciel est un logiciel déroulant par menu. La mise sous tension par un moyen non représenté fait apparaître une image "menu". Le pointage d'un curseur apparaissant sur l'image est effectué par la capture des mouvements de la jumelle par les capteurs 19 et 20. Dans cette fonction, le curseur est considéré comme immobile. L'image suit les mouvements de la jumelle, ainsi une diminution de l'angle de site de la jumelle fait monter le curseur, un déplacement angulaire de la jumelle vers la droite fait mouvoir le curseur vers la gauche de l'image.

Les mouvements permettent ainsi le choix d'un item du menu par pointage du curseur, la commande correspondant aux choix étant assurée par la touche D, 18.

Dans l'un des items du menu est offerte la possibilité de choix de caractères alphanumériques qui, par sélections successives, constituent un message qui s'inscrit dans une fenêtre de dialogue. On constitue ainsi l'équivalent d'un clavier.

Le déroulement d'un menu peut être interrompu par la réception par le calculateur d'un message en provenance d'un organe extérieur, par exemple un poste émetteur-récepteur 39 (figure 5). Ce message peut déclencher le "bip" sonore et/ou l'affichage d'une fenêtre sur l'image de dialogue. Par la touche D, l'utilisateur spécifie la prise en compte de ce message qui reçoit alors un traitement prioritaire avec présentation d'un menu adapté à la nature du message.

Les différents items du menu comportent un sous-menu "tête haute" qui permet par exemple l'affichage de données contenues dans la mémoire du calculateur. Dans ce cas, les données doivent être correlées au champ de vision de la lunette. Ce dernier est calculé à partir des informations sur la position de l'observateur fournie par le récepteur de localisation et de l'angle de visée de la lunette fourni par les capteurs directionnels 19, 20. Le logiciel permet alors le choix des informations qui doivent être affichées (position d'éléments représentés par une symbologie adaptée). Le changement d'orientation de la lunette provoquera un déplacement des adresses mémoire à partir desquelles l'information est élaborée de telle sorte que les informations présentées soient toujours en corrélation de position avec l'image observée.

Les différents items du menu comportent également un sous-menu tête basse.

Ce menu prévoit essentiellement différentes modalités de présentation de cartes.

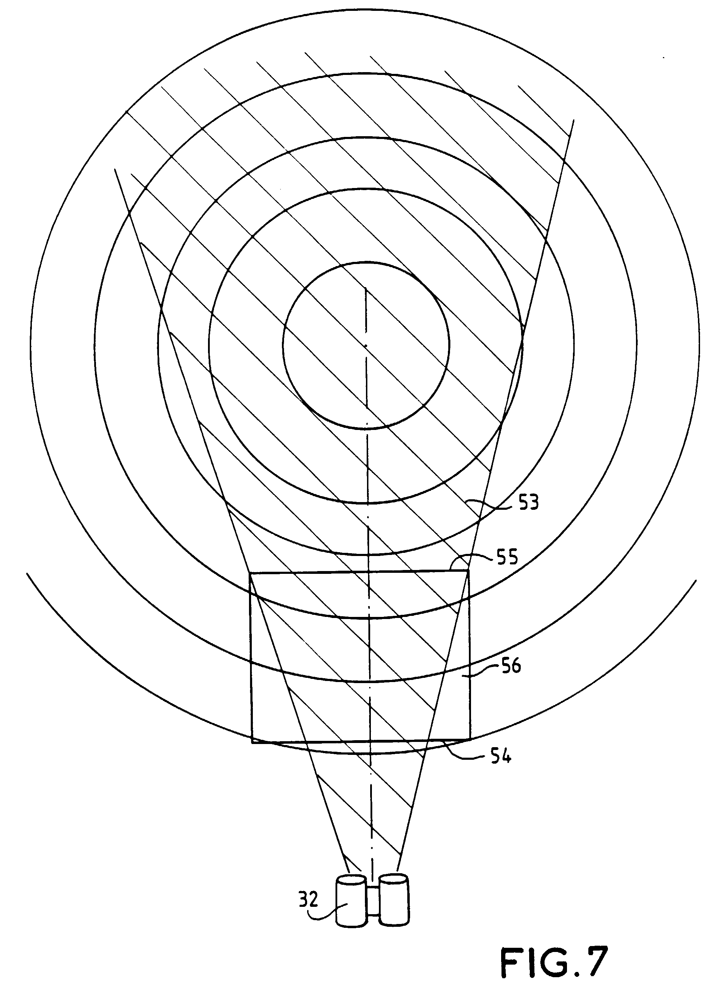

Dans un mode dit "table d'orientation" une carte géographique est présentée, la ligne médiane haute basse de la carte correspond à l'axe de visée de la lunette, les points haut et bas à des points souhaités réglés en plus ou en moins au moyen de la touche R et sélectionnés par la touche D. L'échelle de présentation est calculée pour que la carte occupe tout l'écran. L'exploration latérale de la carte se fait par changement d'orientation de la jumelle. Des positions d'éléments, représentées par des symboles, peuvent également apparaître sur commande. Les différentes surfaces de cartes que l'on peut ainsi sélectionner sont représentées figure 7. Cette figure représente les jumelles 32 et une zone angulaire 53 correspondant à la zone visualisée par les jumelles. Les touches R et D permettent la sélection d'une limite proche 54 et d'une limite lointaine 55. La zone qui est visualisée est alors un rectangle 56 dont la largeur est déterminée par l'angle d'ouverture de la jumelle et la distance latérale vue à la distance lointaine 55 sélectionnée.

Dans un mode dit "Atlas", la carte est présentée par page comme dans un atlas. En situation initiale du mode, est présentée la page dans laquelle est situé le porteur. L'échelle de présentation est indiquée et peut être éventuellement changée par la touche R. Des flèches d'exploration situées respectivement sur les quatre côtés de la carte permettent les passages aux pages haute, basse, droite ou gauche. Les positions du porteur en mouvement évoluent par rapport à la carte qui reste fixe.

Dans un mode dit "mode Navigation", la position du porteur est systématiquement au centre de la carte présentée. L'orientation de la jumelle est matérialisée par une flèche. La carte évolue en fonction du déplacement du porteur. Dans tous les cas, une fenêtre de dialogue est située en bas de l'écran pour la réception de message. Leur acquittement, lecture ou mémorisation, se fait par désignation.

L'architecture informatique permettant l'utilisation de tels logiciels de la façon indiquée ci-dessus est représentée figure 6. Le calculateur 34 comporte un processeur de calcul d'adresse 34-1 qui reçoit les informations en provenance du récepteur de localisation 37, des capteurs 19, 20 et des jeux d'instructions sélectionnés en fonction des commandes transmises par les touches 16 à 18. Les données des mémoires sélectionnées d'une mémoire externe 34-2, constituées par exemple d'un disque optique, sont alors introduites dans le calculateur pour réaliser la commande de l'écran 4.

Dans un autre mode de réalisation représenté figure 5b, la jumelle comporte deux blocs de touches 40, 41 comportant chacun quatre touches soit au total huit touches 42 à 49.

Les deux blocs 40, 41 sont situés chacun sur le dessus des deux canons de la jumelle et conformés pour être ergonomiquement facilement accessibles aux doigts de la main lorsque les mains tiennent la jumelle en position d'observation.

Le fonctionnement d'ensemble est très dépendant des logiciels incorporés au calculateur.

Quelques-unes des fonctions réalisées au moyen de l'invention selon cette réalisation particulière seront explicitées ci-après.

La touche 42 est une touche marche/arrêt qui permet de mettre sous tension le calculateur et les divers éléments de la jumelle. Le logiciel est configuré en menus.

Dès la mise sous tension, un système opérateur interne auto-exécute un programme faisant apparaître les deux options principales du menu soit "tête haute" et "tête basse".

La touche 44 permet de déplacer par pas un curseur permettant le positionnement sur tête haute ou tête basse, la touche 45 permet de cliquer la partie du menu choisi.

Si le menu tête haute est choisi, le calculateur exécute un programme permettant, à partir des données reçues du récepteur de localisation 37 et de l'orientation de l'axe de visée de jumelle, de calculer les contours du lieu géographique apparaissant dans la jumelle.

Le menu tête haute comporte les options "positionnement", "désignation", "désignation laser".

La touche 44 permet de déplacer le curseur sur ce menu et la touche 45 de cliquer le menu choisi.

L'option positionnement permet de faire apparaître sur l'écran une image de synthèse représentant au choix de façon sélective ou cumulative des éléments apparaissant dans le sous menu positionnement. Les éléments à positionner sont extraits de la mémoire du calculateur et présentés de façon à apparaître en situation dans le paysage.

Les éléments à positionner sont listés ; la liste comporte des éléments géographiques. Le cliquage de ces éléments par la touche 45 ouvre une fenêtre où apparaît la liste des éléments géographiques que l'on souhaite visualiser : cours d'eau, ponts, routes, lignes électriques, lignes de niveau ... la touche 44 permet de descendre dans ce menu ; la touche 45 cliquée une fois permet de sélectionner les divers éléments de façon cumulative, pressée deux fois elle interrompt le choix cumulatif dans la fenêtre "éléments géographiques", elle ferme la fenêtre et passe à l'élément suivant de la fonction "positionnement" soit par exemple "amis". Le cliquage de cette fonction par la touche 45 pressée une fois permettra de faire apparaître en superposition et en situation les positions amies et leur identification.

Pressé deux fois, elle interrompt le choix et déclenche l'apparition des éléments choisis selon une symbologie prédéterminée.

La fonction désignation fait apparaître un réticule sur l'écran selon l'axe de visée de la lunette. Pour désigner une position, l'utilisateur clique la touche 45. Le cliquage déclenche le télémètre laser 29, le calcul des coordonnées géographiques de la position, l'ouverture d'une fenêtre identification où apparaît une liste d'identifications possibles et une ligne "aide à l'identification".

Si l'observateur peut sans aide identifier la position, il fait descendre le curseur dans la fenêtre au moyen de la touche 44 et clique la touche 45 lorsqu'elle est sur la ligne correspondant à l'identité de la position, s'il clique la ligne "aide à l'identification" une nouvelle fenêtre s'ouvre où apparaissent des identifications sommaires qu'il est possible, là encore, selon le procédé décrit plus haut de choisir de façon sélective ou cumulative, on pourra choisir par exemple véhicule à roues, à chenille, à chenille et à roues... lorsque l'utilisateur aura fait son choix en fonction de ce qu'il voit, le programme fera apparaître des silhouettes d'engins répondant aux critères sélectionnés, la touche 49 maintenue pressée permettra de régler la taille de la silhouette la touche 48 maintenue pressée permettra de la faire tourner.

La touche 47 permettra l'envoi par l'intermédiaire de l'émetteur récepteur 39, de la position et de son identification aux différents membres d'une équipe.

Cette position sera alors incluse en mémoire de chacun des calculateurs.

Quelle que soit la fonction choisie, le déplacement de la lunette et donc de son champ de vision provoque, en version tête haute, le déplacement corrélatif de l'image d'information générée par l'écran 4.

Dans l'option tête basse du menu seule l'image générée par l'écran 4 apparaît, la jumelle se comporte alors comme un moyen de lire un micro écran. A titre d'exemple on citera la possibilité de lecture de carte à différente échelle et page et à page dit mode Atlas et la possibilité de lecture d'une carte à échelle sélectionnée de façon continue, le mouvement de la lunette dans une direction provoquant grâce à la détection des senseurs le déplacement dans le même sens de la carte.

Les utilisations ci-dessus décrites de la jumelle ne sont pas exhaustives.

Elles ne sont données qu'à titre d'exemple et pour suggérer tout ce qu'il est possible de faire avec un ensemble intégré autour d'un calculateur auquel est adjoint une mémoire à grande capacité de stockage telle qu'un disque optique.

De même la description de la lunette équipée ne fait pas état de tous les modules additionnels ou optionnels qu'il est possible d'ajouter et qui élargissent le champ d'utilisation. On citera à titre d'exemple l'addition, pour la vison de nuit, d'un module optionnel 50 amplificateur de lumière représenté figure 5.

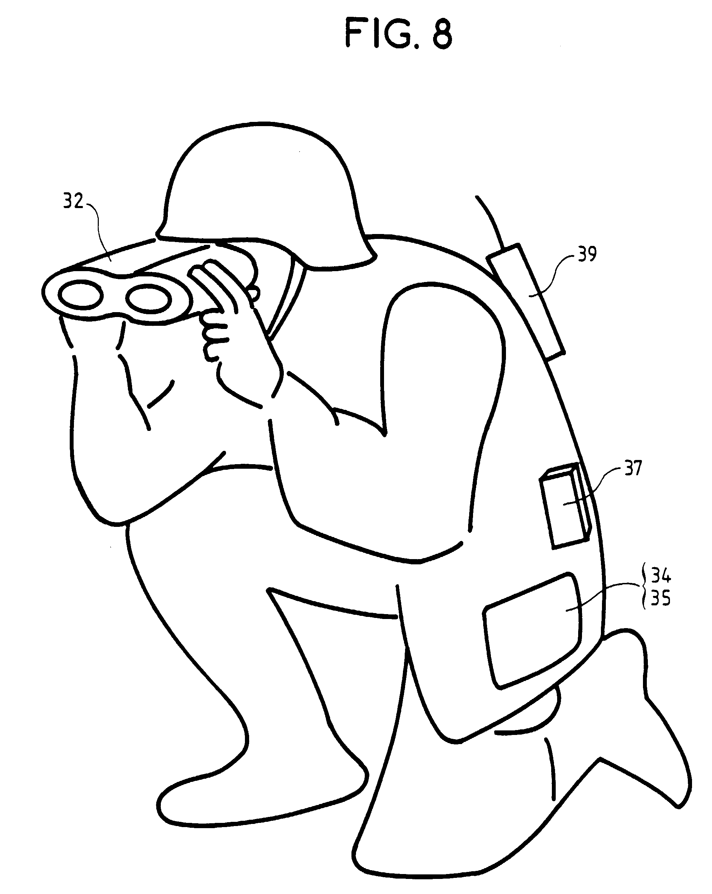

La figure 8 représente un combattant équipé du dispositif complet selon l'invention. Les divers éléments sont logés dans des poches ou en bandoulière.

## Revendications

1. Dispositif de visualisation (32) comportant un boîtier (1) logeant des moyens optiques comportant un objectif (3), un oculaire (2), ces moyens permettant la vision selon un axe dit axe optique (AA'), des moyens de réglage de la netteté (51) accessibles de l'extérieur du boîtier, les moyens optiques permettant la formation d'une image à partir d'un champ de vision pouvant comprendre tout ou partie d'une zone déterminée par l'axe optique et un angle dit angle d'ouverture des moyens optiques, et comportant, logés à l'intérieur du boîtier (1) :
- des moyens de visualisation (4, 6, 7) d'une image lumineuse formée à partir de pixels commandables par un calculateur , et
- au moins un composant optique de renvoi (8) permettant de superposer à l'image du champ de vision l'image des moyens de visualisation (4, 6, 7),
caractérisé en ce qu'il comporte :
- des capteurs (19, 20) montés sur le boîtier (1), permettant de déterminer la direction de l'axe de visée du dispositif, ces capteurs étant reliables à un calculateur par des liaisons (21, 22), et
- au moins un bloc de touches (40, 41) monté sur le boîtier, comportant une ou plusieurs touches reliables par des liaisons (52) à un calculateur.

2. Dispositif selon la revendication 1 caractérisé en ce qu'il comporte deux blocs de touches, l'un des blocs de touches (40) ne comportant que deux touches (16, 17) à trois positions et l'autre une seule touche (18).

3. Dispositif selon l'une quelconque des revendications 1 ou 2, caractérisé en ce que les capteurs de direction sont constitués par un magnétomètre (19) et un inclinomètre (20).

4. Dispositif selon l'une quelconque des revendications 1 ou 2, caractérisé en ce que les capteurs de direction sont constitués par trois gyromètres (23, 24, 25) reliables à un calculateur par des liaisons (26, 27, 28).

5. Dispositif selon l'une quelconque des revendications précédentes, caractérisé en ce que le boîtier de la jumelle comporte en outre un télémètre (29) ayant un axe de visée cet axe étant parallèle à l'axe de visée de la jumelle.

6. Dispositif selon l'une quelconque des revendications précédentes, caractérisé en ce qu'il comporte une prise de raccordement (31).

7. Dispositif selon la revendication 6, caractérisé en ce qu'il comporte un calculateur (34) auquel il est reliable par une liaison (33) qui part du dispositif optique (32) par une prise de raccordement (31) recevant les liaisons des éléments raccordables à un calculateur (5, 18, - 21/22 ou 26/27/28 - 30, 52)

8. Dispositif selon l'une quelconque des revendications 1, 2 et 7 caractérisé en ce que le calculateur comporte des jeux d'instructions et en ce que l'un au moins de ces jeux d'instructions consiste à calculer des adresses mémoire à partir de données comportant les valeurs reçues des capteurs directionnels (19, 20).

9. Dispositif selon la revendication 8, caractérisé en ce que le calculateur (34) est en outre relié à un récepteur de localisation (37) par une liaison (36).

10. Dispositif selon l'une des revendications 8 ou 9, caractérisé en ce que le calculateur (34) est en outre relié à un émetteur récepteur (39) par une liaison (38).

11. Dispositif selon la revendication 1, caractérisé en ce que le moyen de génération d'une image lumineuse est constitué d'un écran électroluminescent (4).

12. Dispositif selon la revendication 1, caractérisé en ce que le moyen de génération d'une image lumineuse est constitué d'un écran à cristaux liquides (4) éclairé par des moyens d'éclairage (6, 7).

13. Dispositif selon la revendication 4, caractérisé en ce que les moyens d'éclairage sont constitués par une plaque électroluminescente (6) et un miroir de renvoi (7).

14. Dispositif selon la revendication 1, caractérisé en ce que le dispositif de renvoi d'image (8) est constitué par au moins une lentille (9) et une lame semi-transparente (10).

15. Dispositif selon la revendication 1, caractérisé en ce que le dispositif de renvoi comporte au moins une lentille (13), un miroir (12) et une lame semi-transparente (10).

16. Dispositif selon la revendication 1, caractérisé en ce que le dispositif de renvoi (8) est constitué d'un hologramme (14) ayant une fonction de miroir et une fonction de focalisation.

17. Dispositif selon la revendication 1, caractérisé en ce que l'objectif (3) comporte un atténuateur (15) électriquement commandable.

18. Dispositif selon la revendication 7, caractérisé en ce que l'atténuateur (15) est constitué par un cristal liquide maintenu entre deux lames minces transparentes sur lesquelles sont fixées des électrodes.

## Patentansprüche

1. Anzeigevorrichtung (32) mit einem Gehäuse (1), das optische Mittel aufnimmt, die ein Objektiv (3) und ein Okular (2) enthalten, wobei diese Mittel das Sehen entlang einer Achse ermöglichen, die optische Achse (AA') genannt wird, sowie Mittel (51) zur Regulierung der Schärfe, die von außerhalb des Gehäuses zugänglich sind, wobei die optischen Mittel das Abbilden eines Bildes ausgehend von einem Sehfeld ermöglichen, das einen Bereich, der von der optischen Achse und einem Winkel, der Öffnungswinkel der optischen Mittel genannt wird, bestimmt wird, vollständig oder teilweise enthalten kann, und im Inneren des Gehäuses (1) aufgenommen enthält:
- Mittel (4, 6, 7) zur Anzeige eines Lichtbildes, das ausgehend von Pixeln gebildet ist, die von einem Rechner steuerbar sind, und
- wenigstens ein optisches Umlenk-Bauteil (8), welches es ermöglicht, dem Bild des Sehfeldes das Bild der Anzeigemittel (4, 6, 7) zu überlagern,
dadurch gekennzeichnet, daß sie enthält:
- am Gehäuse (1) angebrachte Aufnehmer (19, 20), die es ermöglichen, die Richtung der Visierachse der Vorrichtung zu bestimmen, wobei dieser Aufnehmer mit einem Rechner über Verbindungen (21, 22) verbindbar sind, und
- wenigstens ein Tastenfeld (40, 41), das an dem Gehäuse angebracht ist und eine Taste oder mehrere Tasten enthält, die mit einem Rechner über Verbindungen (52) verbindbar sind.

2. Vorrichtung nach Anspruch 1, dadurch gekennzeichnet, daß sie zwei Tastenfelder enthält, wobei eines der Tastenfelder (40) nur zwei Tasten (16, 17) mit drei Stellungen enthält und das andere eine einzige Taste (18) enthält.

3. Vorrichtung nach einem der Ansprüche 1 und 2, dadurch gekennzeichnet, daß die Richtungs-Aufnehmer durch ein Magnetometer (19) und einen Neigungsmesser (20) gebildet sind.

4. Vorrichtung nach einem der Ansprüche 1 und 2, dadurch gekennzeichnet, daß die Richtungs-Aufnehmer durch drei Gyrometer (23, 24, 25) gebildet sind, die mit einem Rechner über Verbindungen (26, 27, 28) verbindbar sind.

5. Vorrichtung nach einem der vorhergehenden Ansprüche, dadurch gekennzeichnet, daß das Gehäuse des Fernglases außerdem einen Entfernungsmesser (29) aufweist, der eine Visierachse hat, wobei diese Achse parallel zur Visierachse des Fernglases ist.

6. Vorrichtung nach einem der vorhergehenden Ansprüche, dadurch gekennzeichnet, daß sie einen Verbindungsanschluß (31) enthält.

7. Vorrichtung nach Anspruch 6, dadurch gekennzeichnet, daß sie einen Rechner (34) enthält, mit dem sie über eine Verbindung (33) verbindbar ist, die von der optischen Vorrichtung (32) mittels eines Verbindungsanschlusses (31) ausgeht, der die Verbindungen (5, 18, 21/22 oder 26/27/28, 30, 52) der mit einem Rechner verbindbaren Elemente aufnimmt.

8. Vorrichtung nach einem der Ansprüche 1, 2 und 7, dadurch gekennzeichnet, daß der Rechner Befehlssätze enthält und daß wenigstens einer dieser Befehlssätze darin besteht, Speicheradressen ausgehend von Daten zu berechnen, welche die Werte enthalten, die von den Richtungs-Aufnehmern (19, 20) empfangen wurden.

9. Vorrichtung nach Anspruch 8, dadurch gekennzeichnet, daß der Rechner (34) außerdem mit einem Lokalisierungs-Aufnehmer (37) über eine Verbindung (36) verbunden ist.

10. Vorrichtung nach einem der Ansprüche 8 und 9, dadurch gekennzeichnet, daß der Rechner (34) außerdem mit einem Sende-Empfänger (39) über eine Verbindung (38) verbunden ist.

11. Vorrichtung nach Anspruch 1, dadurch gekennzeichnet, daß das Mittel zur Erzeugung eines Lichtbildes aus einem elektrolumineszierenden Bildschirm (4) besteht.

12. Vorrichtung nach Anspruch 1, dadurch gekennzeichnet, daß das Mittel zur Erzeugung eines Lichtbildes aus einem Flüssigkristall-Bildschirm (4) gebildet ist, der von Beleuchtungsmitteln (6, 7) beleuchtet wird.

13. Vorrichtung nach Anspruch 4, dadurch gekennzeichnet, daß die Beleuchtungsmittel aus einer elektrolumineszierenden Platte (6) und einem Umlenkspiegel (7) bestehen.

14. Vorrichtung nach Anspruch 1, dadurch gekennzeichnet, daß die Vorrichtung (8) zur Bildumlenkung aus wenigstens einer Linse (9) und einem halbdurchlässigen Plättchen (10) besteht.

15. Vorrichtung nach Anspruch 1, dadurch gekennzeichnet, daß die Umlenkvorrichtung wenigstens eine Linse (13), einen Spiegel (12) und ein halbdurchlässiges Plättchen (10) enthält.

16. Vorrichtung nach Anspruch 1, dadurch gekennzeichnet, daß die Umlenkvorrichtung (8) aus einem Hologramm (14) besteht, das die Funktion eines Spiegels und eine Fokussierungsfunktion hat.

17. Vorrichtung nach Anspruch 1, dadurch gekennzeichnet, daß das Objektiv (3) ein elektrisch steuerbare Dämpfungsvorrichtung (15) aufweist.

18. Vorrichtung nach Anspruch 7, dadurch gekennzeichnet, daß die Dämpfungsvorrichtung (15) aus einem Flüssigkristall besteht, der zwischen zwei dünnen transparenten Plättchen gehalten ist, an denen Elektroden befestigt sind.

## Claims

1. Display device (32) including a casing (1) housing optical means including an objective (3), an eyepiece (2), these means allowing vision along an axis termed the optical axis (AA'), sharpness adjustment means (51) accessible from outside the casing, the optical means allowing the formation of an image from a field of view which can comprise all or part of a zone determined by the optical axis and an angle termed the angle of aperture of the optical means, and including, housed inside the casing (1):
- means (4, 6, 7) for displaying a luminous image formed from computer controllable pixels, and
- at least one optical deviating component (8) enabling the image from the display means (4, 6, 7) to be superimposed on the image of the field of view,
characterized in that it includes:
- sensors (19, 20) mounted on the casing (1), making it possible to determine the direction of the viewing axis of the device, these sensors being connectable to a computer by links (21, 22), and
- at least one array of buttons (40, 41) mounted on the casing, including one or more buttons connectable by links (52) to a computer.

2. Device according to Claim 1, characterized in that it includes two arrays of buttons, one of the arrays of buttons (40) including just two buttons (16, 17) with three positions and the other a single button (18).

3. Device according to either of Claims 1 and 2, characterized in that the direction sensors consist of a magnetometer (19) and an inclinometer (20).

4. Device according to either of Claims 1 and 2, characterized in that the direction sensors consist of three rate gyros (23, 24, 25) connectable to a computer by links (26, 27, 28).

5. Device according to any one of the preceding claims, characterized in that the casing of the binoculars furthermore includes a range-finder (29) having a viewing axis, this axis being parallel to the viewing axis of the binoculars.

6. Device according to any one of the preceding claims, characterized in that it includes a plug adaptor (31).

7. Device according to Claim 6, characterized in that it includes a computer (34) to which it is connectable by a link (33) which leaves the optical device (32) via a plug adaptor (31) receiving the links of the elements which can be plugged into a computer (5, 18, - 21/22 or 26/27/28 - 30, 52).

8. Device according to any one of Claims 1, 2 and 7, characterized in that the computer includes instruction sets and in that one at least of these instruction sets consists in computing memory addresses from data containing the values received from the directional sensors (19, 20).

9. Device according to Claim 8, characterized in that the computer (34) is furthermore connected to a locating receiver (37) by a link (36).

10. Device according to one of Claims 8 and 9, characterized in that the computer (34) is furthermore connected to a transceiver (39) by a link (38).

11. Device according to Claim 1, characterized in that the means of generating a luminous image consists of an electroluminescent screen (4).

12. Device according to Claim 1, characterized in that the means of generating a luminous image consists of a liquid crystal screen (4) lit by lighting means (6, 7).

13. Device according to Claim 4, characterized in that the lighting means consist of an electroluminescent pane (6) and a diverting mirror (7).

14. Device according to Claim 1, characterized in that the image diverting device (8) consists of at least one lens (9) and one semi-transparent plate (10).

15. Device according to Claim 1, characterized in that the diverting device includes at least one lens (13), one mirror (12) and one semi-transparent plate (10).

16. Device according to Claim 1, characterized in that the diverting device (8) consists of a hologram (14) having a mirror function and a focusing function.

17. Device according to Claim 1, characterized in that the objective (3) includes an electrically controllable attenuator (15).

18. Device according to Claim 7, characterized in that the attenuator (15) consists of a liquid crystal held between two transparent thin plates to which electrodes are fixed.
